# EUROPÄISCHE PATENTSCHRIFT

(11) **EP 0 768 237 B1**
(45) Veröffentlichungstag und Bekanntmachung des Hinweises auf die Patenterteilung: **16.08.2000**
(21) Anmeldenummer: 96116172.6
(22) Anmeldetag: 09.10.1996
(51) Int. Cl.: B63G 8/24, B63G 8/22, G05D 1/06

(54) **Verfahren und Anordnung zur Schweberegelung von getauchten Fahrzeugen**
method and device to control the hovering of submerged watercraft
Méthode et appareil pour contrôler des engins submersibles en plongée stationnaire

(30) Priorität: 10.10.1995 DE 19537642
(43) Veröffentlichungstag der Anmeldung: 16.04.1997
(73) Patentinhaber: SIEMENS AKTIENGESELLSCHAFT, 80333 München (DE)
(72) Erfinder: Freund, Harald, 91358 Kunreuth (DE); Singer, Klaus, 91334 Hemhofen (DE); Tröndle, Hans-Peter, Dr., 91301 Forchheim (DE)

(56) Entgegenhaltungen:
- EP-A- 0 339 858
- DE-B- 1 220 282
- US-A- 3 946 685

## Beschreibung

Die Erfindung bezieht sich auf ein Verfahren zur Schweberegelung von U-Booten, bei dem zum Gewichtsausgleich Seewasser von See in einen ausgewählten Tank des Bootes und umgekehrt gepumpt wird, wobei ein Algorithmus im Tauchbereich das Schweben und die Tiefenänderungen erfaßt und einen Regelvorgang für Fördermengen von Seewasser gewährleistet. Daneben bezieht sich die Erfindung auch auf eine Anordnung zur Verwendung bei der Tiefenregelung eines schwebenden U-bootes durch Ausführung des Verfahrens mit einer geregelten Pumpe zum An- bzw. Abpumpen von Seewasser in einen Gewichtsausgleichstank und mit Einrichtungen wenigstens zur Positionsregelung der Schwebetiefe mit unterlagerter Geschwindigkeitsregelung einerseits und unterlagerter Volumenregelung andererseits.

Ein antriebsloses, anfänglich nahezu oder gänzlich ruhendes U-Boot soll entsprechend einem eingegebenen Tiefensollwert automatisch in einer aufgesuchten Tiefe durch ständigen Gewichtsausgleich des Bootes in hydrostatischem Gleichgewicht gehalten werden. Gegebenenfalls kann für den gleichen Zweck durch momentane Gewichtsänderungen eine von der aktuellen Position des Bootes und dem vorgegebenen Tiefensollwert abhängige Tiefenänderung im gesamten Tauchbereich herbeigeführt werden.

Das Halten eines getauchten Fahrzeuges im Schwebezustand in einer angegebenen Tauchtiefe durch Gewichtsausgleich wird allgemein als sogenanntes "Hovering" bezeichnet. Dabei erfolgt die Gewichtszunahme bzw. -abnahme durch Pumpen von Seewasser von See in einen ausgewählten Tank oder umgekehrt. Das Schweben und mögliche Tiefenänderungen sollen entsprechend dem vorgegebenen Tiefensollwert bei Störungen bestimmter Größe jederzeit beherrschbar geregelt werden, so daß Störungen jeder Art ausgeglichen werden.

Aus der EP-A-0 339 858 ist ein System für ein getauchtes Fahrzeug bekannt, wobei ein Kursgeber ("autopilot") mit einem Simulator vorhanden ist. Dabei geht es im wesentlichen darum, im Sinne des sogenannten Trimmens, d.h. also den Antrieb und/oder die Steuerorgane des U-Bootes zu beeinflussen. Gegenstand der EP-A-0 339 858 ist speziell im Rahmen der zugehörigen Regeleinrichtung ein sogenannter Beobachter, der eine Berechnungseinrichtung enthält, mit dem Signale ermittelt werden, die unterschiedliche Kräfte zum Ausgleich insbesondere von Nickschwingungen aus der Trimmbewegung ermitteln. Solche Beobachter sind in der Regelungstechnik allgemein üblich. Komplexer sind die Anlagen zum Hovering, die durch Gewichtsausgleich betrieben werden. Speziell der Gewichtsausgleich beim sog. Hovering wird bei der EP-A-0 339 858 sowohl mittels Handsteuerung durch den Bediener als auch automatisch bewerkstelligt.

Weiterhin ist aus der US-A 3 946 685 eine Einrichtung für ein Hovering-System für U-Boote bekannt, bei der über einen Computer Ventile zum Pumpen von Seewasser in das Boot bzw. umgekehrt gesteuert werden. Signalgeber ist dabei im wesentlichen eine Druckmeßeinheit.

Aufgabe der Erfindung ist es daher, ein Verfahren und eine zugehörige Anordnung zu schaffen, mit denen speziell für den Schwebezustand von getauchten Fahrzeugen eine in der Praxis funktionierende Tiefenhaltung und/oder auch Tiefenänderung realisiert werden.

Die Aufgabe ist bei einem Verfahren der eingangs genannten Art erfindungsgemäß durch einen solchen Algorithmus gelöst, der die im U-Boot dominanten Stellbegrenzungen, insbesondere Antriebsspannungen für die Pumpen, maximales Moment, maximale Pumpenleistung, begrenzte Stellvolumen und/oder Kompensation der Volumenkompression des Bootes, erfaßt und die jeweiligen, von der Tiefe und der benötigten Fördermenge abhängigen Stelleistungen an den erfassten Stellbegrenzungen adaptiert. Vorteilhafterweise ist der Algorithmus in der Lage, die Stellbegrenzungen zu beherrschen, beispielsweise abhängig von der Größe des Verfahrweges des U-Bootes, ohne zu nichtlinearen Instabilitäten zu führen.

Bei der zugehörigen Anordnung zur Durchführung des Verfahrens mit einer Einrichtung zur Positionsregelung der Schwebetiefe mit unterlagerter Geschwindigkeitsregelung einerseits und unterlagerter Volumenregelung andererseits haben die Regeleinheiten eine nichtlineare Einfahrkennlinie und eine adaptive Sollwertführung für die tiefenabhängige Geschwindigkeit und beherrschen damit die Stellbegrenzungen. Vorzugsweise ist wenigstens ein zeitoptimierter, nichtlinearer Funktionsgeber zur Voreinstellung der Tiefenänderungsgeschwindigkeit vorhanden. Zusätzlich kann eine Einheit zur Vorsteuerung des Tiefensollwertes und des Geschwindigkeitssollwertes für schnelle Tiefenänderungen vorhanden sein.

Bei der Erfindung können Mittel zur Berücksichtigung der sogenannten Trimmung beim Hovern durch Rückführung des Trimmwinkels, der Trimmgeschwindigkeit und der Trimmbeschleunigung vorhanden sein. Weiterhin sind Mittel zur Kombination einer linearen und zeitoptimierten Geschwindigkeitsregelung mit adaptiver Begrenzung des Geschwindigkeitsreglers an die maximale momentan tiefenabhängig zur Verfügung stehenden Pumpenleistung vorgesehen.

Im Rahmen der Erfindung kann für das Hovern ein sogenannter Lastbeobachter vorhanden sein, wie er für sich gesehen vom Stand der Technik bekannt ist. Daneben können zusätzliche Mittel zur Seegangsadaption zwecks Vermeidung von nichtlinearen Instabilitäten des Regelkreises vorgesehen werden.

Mit der Erfindung ist also eine Regel- und Steuerstruktur geschaffen, welche die von der Werft des jeweiligen U-Bootes vorgegebenen Komponenten, wie beispielsweise Hovertanks, Tiefensensoren, Wasserdurchflußmesser, Druckmesser, Füllstandsmesser, Rohre, Ventile od. dgl., und die zugehörigen Stellglieder, wie DC-Chopper, Motor und Pumpe, sowie ein realistisches, mathematisch formuliertes Bootsmodell, das alle relevanten physikalischen Einflüsse beim Hovern berücksichtigt, so in die Struktur einbezieht, daß erstmalig ein zur Beherrschung der Hoveringaufgabe optimaler Regler zur Verfügung steht. Wesentlich ist, daß immer eine Stellreserve zur Verfügung steht.

Weitere Einzelheiten und Vorteile der Erfindung ergeben sich aus der nachfolgenden Figurenbeschreibung von Ausführungsbeispielen in Verbindung mit weiteren Unteransprüchen. Es zeigen
- Figur 1: ein Blockschaltbild eines für ein U-Boot geeignetes Hovering-Systems,
- Figur 2: die konkrete Ausführung eines Figur 1 entsprechenden Systems, das weiterhin mit einer Vorsteuerung und einem Hochlaufgeber sowie zusätzlich mit einem sogenannten Lastbeobachter ergänzt ist,
- Figuren 3 bis 6: konkrete Ausführungen der in Figur 1 und 2 angegebenen Regler für Volumen, Geschwindigkeit, Tiefe und eines zeitoptimierten Hochlaufgebers für die Position und
- Figur 7: eine für die Anwendung beim Hovering-System gemäß Figur 1 oder 2 geeignete Anordnung zur Seegangsadaption.

Die Figuren werden teilweise gemeinsam beschrieben.

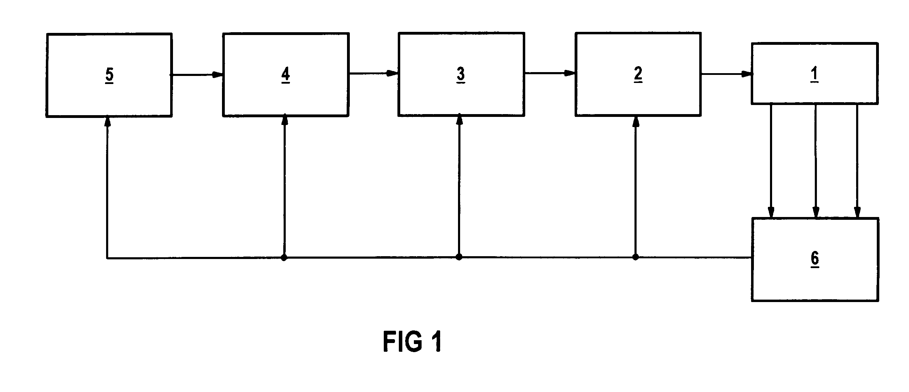

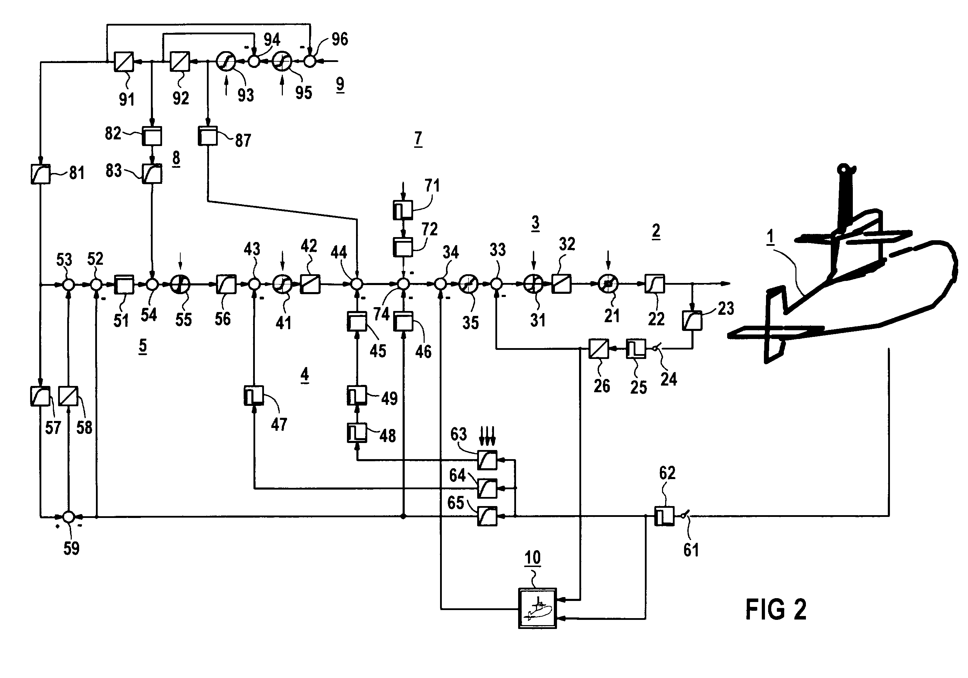

In Figur 1 und Figur 2 kennzeichnet Bezugszeichen 1 ein U-Boot, dem ein Automatisierungssystem zugeordnet ist. Dynamisch kann das U-Boot durch mathematisch formulierte Zustandsgleichungen beschrieben werden (sh. Dissertation Schulz, Universität Braunschweig 1992) und dient so als Ersatz des realen Bootes zum Test der Regelstruktur. Für ein derartiges Modell ist die Regelstruktur des Automatisierungssystems ausgelegt.

Speziell für die Hovering-Regelaufgabe besteht das Automatisierungssystem gemäß Figur 1 im einzelnen aus einem Regelkreis 2 für die Pumpen, einem Mengenregler 3, einem Geschwindigkeitsregler 4 und einem Positionsregler 5, welche in Kaskadenschaltung miteinander verbunden sind und in ihrem jeweiligen Aufbau weiter unten im einzelnen erläutert sind. Den vorstehend angegebenen Blöcken 2 bis 5 ist weiterhin ein Block 6 zur diskreten Istwerterfassung zugeordnet.

In Figur 2 sind die einzelnen Blöcke 2 bis 6 der Figur 1 in üblicher Weise aus geeigneten Regeleinheiten realisiert. Dabei sind jeweils nur die signifikanten Einheiten dargestellt, die im einzelnen variiert werden können und zusammen den gewünschten Algorithmus nachbilden.

In Figur 2 ist der Regelkreis 2 für die Pumpendrehzahl mit einem PTₙ-Glied 22 nachgebildet, das in Kaskadenschaltung dem Volumenregler 3 mit einer Kombination von nichtlinearem Regelglied 31 und einem Proportional-Integralregelglied 32 sowie einer Aussteuerlogik 21 nachgeschaltet ist. Es ist ein Reglervergleichspunkt 33 vorhanden, auf den das Ausgangssignal des PTₙ-Gliedes 22, d.h. der Volumenstrom, über ein weiteres Glättungsglied 23 einer diskreten Meßwerterfassung mit der Abtasteinrichtung 25 bzw. 24 und einem Integralglied 26 rückgekoppelt ist.

Dem Volumenregler 3 ist der Geschwindigkeitsregler 4 vorgeschaltet, der im wesentlichen aus einer Kombination aus adaptivem Regelglied 41 und PI-Regelglied 42 besteht, die beide von Reglervergleichspunkten 43 und 44 flankiert sind. Die Realisierung des Geschwindigkeitsreglers 4 ist komplexer, wurde aber aus Übersichtsgründen vereinfacht dargestellt.

Dem Geschwindigkeitsregler 4 ist der Positionsregler 5 vorgeschaltet, der im einzelnen aus einem P-Glied 51, einem adaptiven Regelglied 55 mit nachgeschaltetem PI-Glied 56 sowie drei Reglervergleichspunkten 52 bis 54 besteht. Auf die Reglervergleichspunkte 52 und 53 wirken zur Sollwertglättung ein PI-Glied 57 und ein I-Glied 58 ein. Letztere werden von der Einheit 6 zur Istwerterfassung angesteuert, die aus einer Abtasteinrichtung 61 bzw. 62 mit nachgeschalteten Filtern 63, 64 und 65 besteht.

Vom ersten Filter 65 wird ein Regelpunkt 59 des Positionsreglers 5 und über ein Verstärkungsglied 46 ein Reglervergleichspunkt 74 des Geschwindigkeitsreglers 4 mit dem gefilteren Positionssignal angesteuert. Vom zweiten Filter 64 gelangt das Signal über ein Differenzierglied 47 auf den Reglervergleichspunkt 43 und vom dritten Filter 63 gelangt das Signal über Differenzierglieder 48 und 49 und im Proportionalverstärkungsglied 45 auf den Reglervergleichspunkt 44. Am Reglervergleichspunkt 43 steht somit die Geschwindigkeit und am Reglervergleichspunkt 44 die Beschleunigung des U-Bootes zur Verfügung.

Weiterhin beinhaltet der Geschwindigkeitsregler 4 Mittel zur Einkopplung des Trimmwinkels, welche im einzelnen aus dem Differenzierglied 71 und dem Verstärkungsglied 72 bestehen, welche als Trimmgeschwindigkeit auf den Reglervergleichspunkt 74 einwirken. Zusätzlich kann auch der Trimmwinkel direkt und nach weiterer Differenzierung der Geschwindigkeit die Trimmbeschleunigung dem Reglervergleichspunkt 74 zugeführt werden.

Figur 2 ist gegenüber Figur 1 mit den Blöcken 1 bis 6 zunächst dahingehend ergänzt, daß eine Vorsteuerung 8 für die Regler 4 und 5 vorhanden ist. Solche Vorsteuerungen sind im Prinzip in der allgemeinen Regelungstechnik bekannt und verbessern das Regelergebnis. Die Vorsteuerung 8 erhält ihre Signale aus einem zeitoptimalen Hochlaufgeber 9. Vorsteuerung 8 und Hochlaufgeber 9 werden beide gemeinsam nachfolgend im einzelnen erläutert:

Die Vorsteuerung 8 besteht im einzelnen aus Verstärkungsgliedern 82 und 87 sowie Glättungsfiltern 81 und 83, wobei das Filter 83 vom Verstärkungsglied 82 angesteuert wird. Der Hochlaufgeber 9 besteht im einzelnen aus Integratoren 91 und 92, zwei nichtlinearen Verstärkungsgliedern 93 und 95, denen Reglervergleichspunkte 94 und 96 zugeordnet sind. Damit wird eine zweifach rückgekoppelte Modell-Regelstrecke gebildet. Über das P-Verstärkungsglied 87 der Vorsteuerung 8 wird das Beschleunigungssignal in den Reglervergleichspunkt 44 des Geschwindigkeitsreglers 4 eingekoppelt. Weiterhin wird das Geschwindigkeitssignal über die Glieder 82 und 83 der Vorsteuerung 8 in den Reglervergleichspunkt 54 des Geschwindigkeitsreglers 4 und ein Positionssignal über das Glied 81 der Vorsteuerung in den Reglervergleichspunkt 52 des Positionsreglers 5 eingekoppelt.

Daneben ist in Figur 2 zusätzlich ein sogenannter Last-Beobachter 10 vorhanden, der am Reglervergleichspunkt 34 mit nachgeschaltetem adaptiven Regelglied 35 einkoppelt. Sogenannte Beobachter sind aus der Regelungstechnik hinreichend vorbekannt, so daß hierauf nicht im einzelnen eingegangen wird.

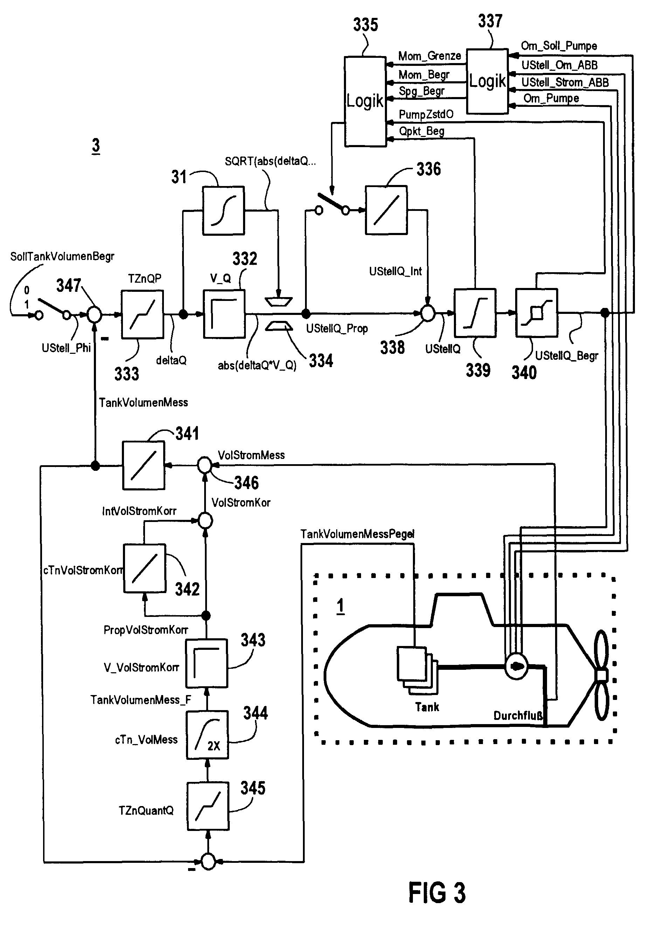

In den Figuren 3 bis 6 werden die in der Figur 2 dargestellten Verfahrenssymbole für die Stellbegrenzungen 31, 41, 55, 93, 95 sowie weitere Steuer- und Regelglieder mit Begrenzungen in einer praktischen Ausführung näher erläutert:

Figur 3 enthält realisiert den Volumenregler 3 aus Figur 1 und 2, dem ein Volumensollwert **UStell_Phi** und der Tankvolumenmeßwert **TankVolumenMess** zugeführt werden. Am Vergleichspunkt 347 wird von beiden Werten die Differenz gebildet und damit unter Berücksichtigung einer adaptierbaren Totzone 333 die geforderte Tankinhaltsänderung **deltaQ** berechnet. Daraus wird mit einem Proportionalglied 332 eine Pumpendrehzahl ohne Begrenzung gebildet. Zusätzlich wird mit dem nichtlinearen Begrenzungsglied 31 unter Berücksichtigung der Verzögerungszeit bei der Tankvolumenberechnung und einer mechanischen Pumpenbremskennlinie die Pumpendrehzahl berechnet. Ein Entscheidungskriterium 334 legt fest, ob ein direkter oder begrenzter Drehzahlsollwert verwendet wird. Die Logikeinheit 335 berechnet aus den angegebenen Eingangsgrößen den Integralanteil 336 des Drehzahlsollwertes. Die Integration wird gesperrt, wenn die geforderte Pumpendrehzahl bereits den erlaubten maximalen Drehzahlbereich verletzt, oder die Drehzahlreglergrenze, oder die Stromreglergrenze erreicht ist, und weiter die gleiche Drehzahl- oder Stromrichtung angefordert wird. Die Logikeinheit 337 berechnet aus den angegebenen Eingangsgrößen die aktuelle Momentengrenze **Mom_Grenze** unter Berücksichtigung des geforderten Pumpendrehzahlsollwertes **OmSoll_Pumpe** und der aktuellen Pumpendrehzahl **Om_Pumpe** sowie die Moment-(**Mom_Begr.**) und Spannungsbegrenzung (**Spg_Begr.**), wenn der Pumpendrehzahlregler einen Wert liefert, der 95% Momentengrenze entspricht bzw. der Pumpenstromregler einen Wert liefert, der 95% der maximalen Motorspannung entspricht, oder der Stromsteller der Pumpe unter dem minimalen Versorgungsspannungslimit für die volle Pumpenleistungsfähigkeit liegt. Am Summierpunkt 338 werden der Proportionalanteil **UStellQ_Prop** und der Integralanteil **UStellQ_Int** zur Pumpendrehzahlanforderung **UStell_Q** aufsummiert. Mit dem Begrenzungsglied 339 wird die Pumpendrehzahl auf die maximal zulässige positive und negative Drehzahl der frei laufenden Pumpe begrenzt. Bei höheren Differenzdruckwerten an der Pumpe muß die Drehzahlgrenze reduziert werden. Wenn die Drehzahlanforderung die maximal zulässige Drehzahl überschreitet, müssen alle Integratoren gesperrt werden, die eine höhere Drehzahl in der aktuellen Drehzahlrichtung erzwingen wollen. Mit Block 340 wird eine druckabhängige Minimalpumpendrehzahl berechnet, die zur Vermeidung von Beschädigung der Pumpe wegen unzureichender Schmierung und Kühlung nicht unterschritten werden darf. Am Ausgang von Block 340 steht der Pumpendehzahlsollwert **UStellQ_Bgr** zur Verfügung.

Mit den Blöcken 341,342,343,344,345 wird die Meßwertberechnung des aktuellen Tankvolumens **TankVolumenMess** unter Verwendung der aktuellen Wasserdurchflußmenge **VolStromMess** für schnelle Volumenänderungen und dem aktuellen Tankinhalt **TankVolumenMessPegel** für langsame Korrekturen zur Vermeidung des Abtriftens des berechneten Tankinhaltes durchgeführt. Im Summierpunkt 346 werden **VolStromMess** und ein Korrekturwert **VolStromKor** vorzeichenrichtig aufsummiert und mit dem Integrator 341 zum Tankinhalt **TankVolumenMess** aufintegriert.

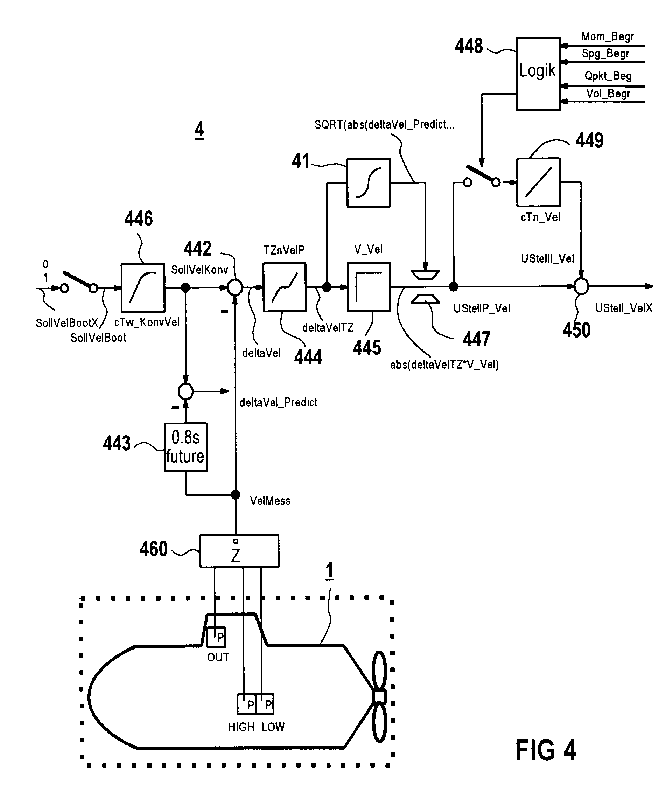

Figur 4 realisiert den Geschwindigkeitsregler 4 aus Figur 1 und 2, dem der Bootsgeschwindigkeitssollwert **SollVelBoot** für die vertikale Bootsgeschwindigkeit zugeführt wird. Daraus wird mit dem PT1-Glättungsglied 446 der Sollwert **SollVelKonv** erzeugt, der am Vergleichspunkt 442 zur Differenzbildung mit dem Geschwindigkeitsmeßwert **VelMess** herangezogen wird. Daraus entsteht der Geschwindigkeitsdifferenzwert **deltaVel**. Mit Block 443 wird ein Geschwindigkeits-Voraussagewert **deltaVel_Predict** berechnet, der den aktuellen Wert 0,8 Sekunden später voraussagt. Mit Block 444 wird eine Totzonenberechnung mit der Geschwindigkeitsdifferenz **deltaVel** durchgeführt. Mit dem Ergebnis wird im Proportionalglied 445 das erforderliche Tankvolumen ohne Begrenzung berechnet. Zusätzlich wird mit dem nichtlinearen Begrenzungsglied 41 unter Verwendung der vorausberechneten Geschwindigkeitsdifferenz und einer nichtlinearen Bremskennlinie unter Berücksichtigung der zur Verfügung stehenden Pumpenkapazität sowie der Kompression des Bootsdruckkörpers das maximal zulässige Differenztankvolumen berechnet. Ein Entscheidungskriterium 447 legt fest, ob das direkte oder das begrenzte Differenztankvolumen verwendet wird.

Die Logikeinheit 448 berechnet aus den angegebenen Eingangsgrößen den Integralanteil 449 des Tankvolumensollwertes und sperrt die Integration, wenn die geforderte Pumpendrehzahl bereits den erlaubten maximalen Drehzahlbereich verletzt, oder die Stromgrenze **Mom_Bgr** des Pumpen-Stellers erreicht ist und weiter die gleiche Stromrichtung angefordert wird, oder die Spannungsgrenze **Spg_Begr** des Pumpen-Stellers erreicht ist und weiter die gleiche Stromrichtung angefordert wird. Am Summierpunkt 450 werden der Proportionalanteil des Differenztankvolumens und der Integralanteil(aktuelles + integrales Differenztankvolumen) für die Tankvolumenanforderung aufsummiert. Mit dem Funktionsblock 460 wird aus dem Tiefenmeßsignal die vertikale Bootsgeschwindigkeit berechnet.

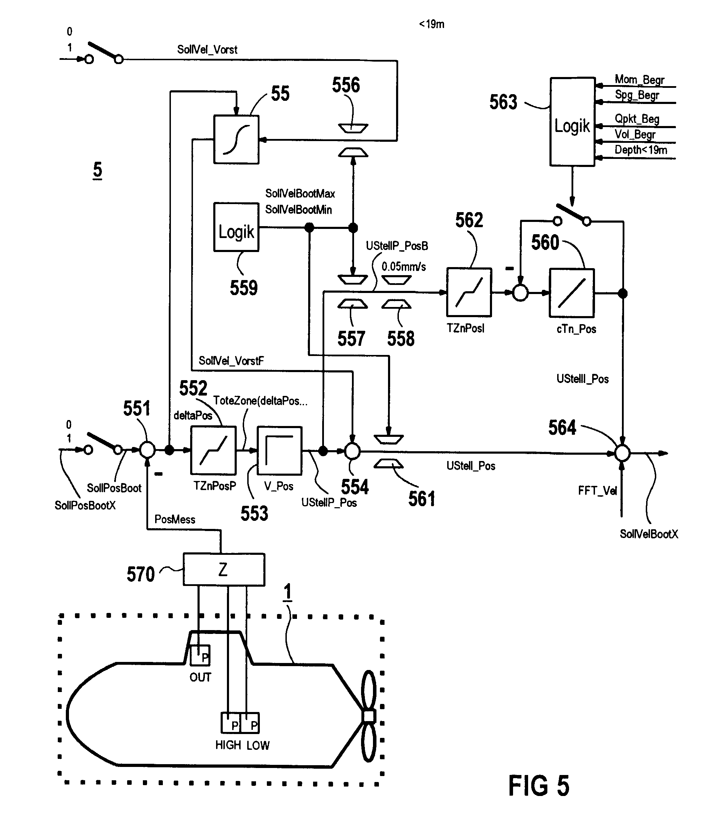

Figur 5 zeigt den Positionsregler 5 aus Figur 1 und 2, dem der Bootspositionssollwert **SollPosBoot** und der Tiefenmeßwert **PosMess** zugeführt werden. Am Vergleichspunkt 551 wird von den beiden Werten die Soll-/Ist-Differenz gebildet und damit unter Berücksichtigung einer adaptierbaren Totzone 552 und dem Proportionalglied 553 der Sollwert **UStellP_Pos** erzeugt. Am Summierpunkt 554 wird dem Stellwert **UStellP_Pos** der Vorsteuersollwert **SollVel_VorstF** aufaddiert, der im nichtlinearen Funktionsblock 55 aus dem vom Funktionsgenerator 9 gemäß Figur 1 gebildeten Vorsteuersollwert **SollVel_Vorst** erzeugt wird. Mit den Begrenzungen 556, 557 und 561 werden die Rechengrößen auf die Maximalwerte begrenzt, die eine hinreichende Stellreserve gewährleisten. Der Block 558 begrenzt die maximal zulässige Integriergeschwindigkeit des Integrators 560. Die Berechnung der erlaubten Maximalgeschwindigkeit in Abhängigkeit von der aktuellen Tiefendifferenz erfolgt mit der Logikeinheit 559. Über den Totzonenblock 562 wird der Integrator 560 mit dem Sollwert **UStellP_Pos** versorgt. Bei Tiefen > 19 m sorgt die Logikeinheit 563 dafür, daß der Integralanteil auf Null gesetzt wird. Bei Tiefen < 19 m wird der Integrator 560 freigegeben.

Die Logikeinheit 563 berechnet aus den angegebenen Eingangsgrößen den Integralanteil 560 des Geschwindigkeitssollwertes und sperrt die Integration, wenn die geforderte Pumpendrehzahl bereits den erlaubten maximalen Drehzahlbereich verletzt, oder die Stromgrenze des Pumpen-Stellers erreicht ist und weiter die gleiche Stromrichtung angefordert wird, oder die Spannungsgrenze des Pumpen-Stellers erreicht ist und weiter die gleiche Stromrichtung angefordert wird. Am Summierpunkt 564 werden der Proportionalanteil der Differenzgeschwindigkeit und der Integralanteil(aktuelle + integrale Differenzgeschwindigkeit) für die Geschwindigkeitsanforderung zum Bootsgeschwindigkeitsollwert **SollVelBootX** aufsummiert. Mit dem Funktionsblock 570 wird das Tiefenmeßsignal **PosMess** erzeugt.

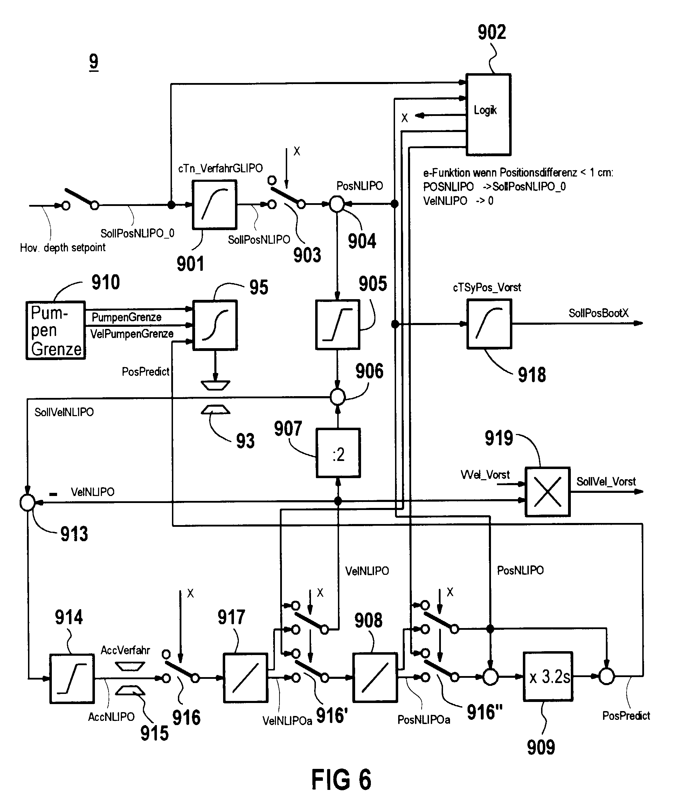

Figur 6 enthält den zeitoptimalen Hochlaufgeber 9 aus Figur 2, dem der Hovering-Tiefensollwert **SollPosNLIPO_0** per Handeingabe vorgegeben und der Logikeinheit 902 sowie über das verzögernde PT1-Glied 901 bei geschlossenem Schalter 903 als Sollwert **SollPosNLIPO** dem Vergleichspunkt 904 zugeführt wird. Beim Einschalten des Hoveringreglers werden der Sollwert **SollPosNLIPO** und der Wert **PosNLIPO** sofort auf den aktuellen Tiefenwert gesetzt. Am Vergleichspunkt 904 wird der Differenzwert gebildet, der anschließend im Block 905 verstärkt und dem Vergleichspunkt 906 zugeführt wird. Der berechnete Tiefenwert **PosNLIPOa** wird durch Integration des berechneten Geschwindigkeitssollwertes **VelNLIPOa** mit dem Integrator 908 erzeugt. Der Geschwindigkeitssollwert **VelNLIPOa** wird durch Integration des Beschleunigungssollwertes **AccNLIPO** mit Integrator 917 gebildet. Die interne Geschwindigkeitssollwertberechnung des zeitoptimierten Hochlaufgebers wird durch Differenzbildung des verstärkten internen Tiefensollwertes **PosNLIPO** und des Geschwindigkeitssollwertes **VelNLIPO** am Vergleichspunkt 906 durchgeführt. Das Ergebnis ist der Wert **SollVelNLIPO**. Von diesem Wert wird der in dem Dividierer 907 berechnete halbe Geschwindigkeitssollwert **VelNLIPO** subtrahiert.

Mit Funktionsblock 909 wird der erwartete Tiefenwert **PosPredict**, der nach dem Funktionsverlauf des Tiefensollwertes **PosNLIPO** innerhalb von 3,2 Sekunden erreicht wird, vorausberechnet. Funktionsblock 910 berechnet die entsprechend den vom aktuellen Differenzdruck abgeleiteten maximalen Pumpendrehzahlen abhängigen Wasserfördermengen und die daraus resultierenden Tauchgeschwindigkeitsgrenzen unter Berücksichtigung der Druckkörpervolumenkompression des Bootes. Die Funktionsblöcke 93, 95 gemäß Figur 2 begrenzen den intern berechneten Geschwindigkeitssollwert **SollVelNLIPO** auf einen minimalen Wert, der aus einer Gruppe von Grenzwerten, die eine feste Geschwindigkeitsvoreinstellung, eine geschwindigkeitsabhängige aktuelle Geschwindigkeitsbegrenzung aufgrund des Pumpendifferenzdruckes und eine Geschwindigkeit, die von der Zielbeschleunigung und dem vorausberechneten Tiefenwert **PosPredict** abgeleitet wird, umfaßt, ermittelt wird.

Die resultierende Geschwindigkeit soll mit der aktuellen Bootsgeschwindigkeit korrespondieren: Am Vergleichspunkt 913 wird die Differenz zwischen dem berechneten Geschwindigkeitssollwert **SollVelNLIPO** eines Modells des Hochlaufgebers und aktuellem Geschwindigkeitssollwert **VeINLIPO** gebildet, die durch entsprechende Beschleunigungszu- bzw. -abnahme korrigiert werden muß, um den aktuellen Geschwindigkeitssollwert **VelNLIPO** des Hochlaufgebermodells anzuheben oder abzuschwächen, und anschließend in den Funktionsblöcken 914, 915 die Beschleunigung und Beschleunigungsbegrenzung berechnet. Anschließend wird mit dem Integrator 917 bei geschlossenen Schaltern 916, 916' und 916'' der aktuelle Geschwindigkeitssollwert **VelNLIPOa** berechnet. Mit PT1-Glied 918 wird der endgültige Tiefensollwert **SollPosBootX** für den Positionsregler prepariert. Die Aufbereitung des endgültigen Geschwindigkeitssollwertes **SollVel_Vorst** des Tiefenreglers erfolgt mit dem Multiplikator 919. Die Logik 902 stoppt den zeitoptimalen Hochlaufgeber, wenn die Differenz zwischen Tiefensollwert **PosNLIPO** für den Tiefenregler und Hovering-Tiefensollwert **SollPosNLIPO0** plus oder minus 1 Zentimeter beträgt. Der Beschleunigungssollwert **AccNLIPO** wird dann auf Null gesetzt. Der Tiefensollwert **PosNLIPO** und der Geschwindigkeitssollwert **VelNLIPO** klingen durch das PT1-Glied 918 verzögert auf Null ab.

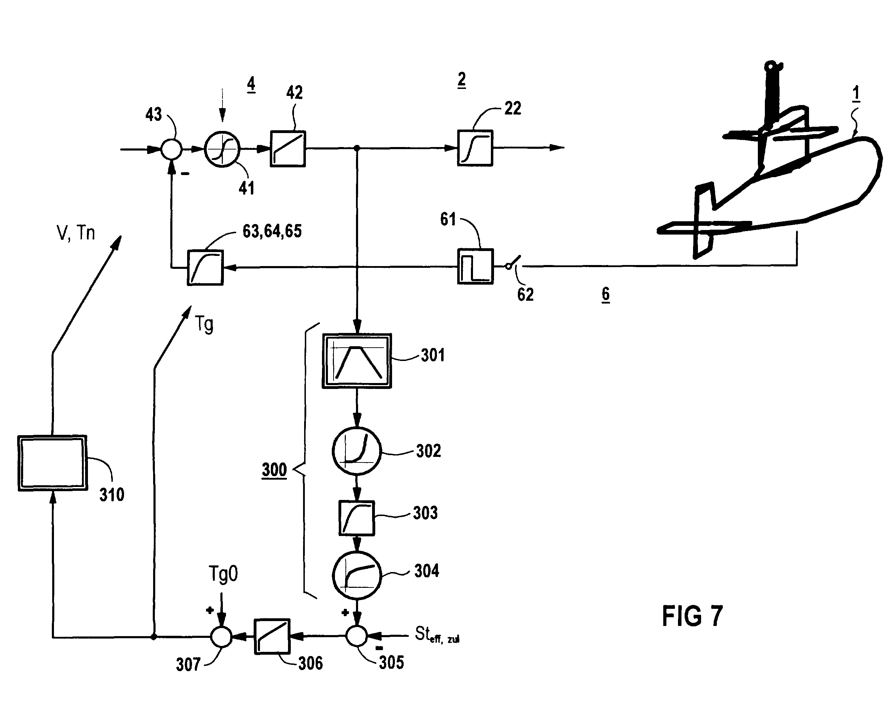

In Figur 7 ist eine Einheit zur Seegangsadaption als Ergänzung einer Tauchfahrzeug-Schwebeanlage gemäß den Figuren 1 oder 2 bzw. 3 bis 6 dargestellt: Beim Schweben in geringer Tiefe muß für den praktischen Einsatz auf See die Stellmechanik der Schwebeanlage, z.B. eine Seewasserpumpe, vor dem Seegangs-Rauschen des Tiefensignals durch eine anpaßbare Seegangsadaption geschützt werden, um den mechanischen Verschleiß der Stellglieder, beispielsweise für die Seewasserpumpe, in Grenzen zu halten. Außerdem wird ohne die abschwächende Wirkung der Seegangsadaption schon bei unbedeutendem Seegang aufgrund der großen Seegangskräfte, die von einem leistungsbegrenzten Stellglied nicht beherrscht werden können, die Schweberegelung gemäß den Figuren 1 oder 2 sehr schnell instabil.

Da das Spektrum des Seeganges bekannt ist, kann die durch den Seegang in der Stellgröße hervorgerufene Unruhe durch eine entsprechende Analyse z.B. des elektrischen Pumpenmomentes für die Seewasserpumpe erkannt werden. Dazu ist in Figur 7 neben den nur angedeuteten Regeleinheiten 2 und 4 und der zugehörigen Istwerterfassung 6 aus Figur 1 bzw. Figur 2 eine zusätzliche Einrichtung 300 vorhanden.

In Figur 7 besteht die Einrichtung 300 insbesondere aus einem auf den Seegang angepaßten Bandpaßfilter 301, dem zur Auswertung ein Effektivwertbildner zugeordnet ist. Letzterer Effektivwertbildner besteht im einzelnen aus einem Quadrierer 302 sowie Einheiten 303 und 304 zur Mittelwertbildung und Wurzelbildung. Der so abgeleitete Effektivwert wird an einen Reglervergleichspunkt 305 mit einem vorgegebenen Grenzwert 'Stellgröße_{eff,zul}' verglichen. Nach Verstärkung im PI-Reglerglied 306 wird im Reglervergleichspunkt 307 die Glättungszeitkonstante TgO als Basisgröße zugeführt und eine variable Zeitkonstante Tg abgeleitet.

Ist der Effektivwert der Seegangsunruhe größer als der zulässige Grenzwert, werden in der Regeleinrichtung für den Schwebevorgang des U-Bootes die Meßwertglättungen 63 bis 65 gleitend erhöht und gleichzeitig die gesamte Regelung entsprechend Figur 1 gesteuert adaptiert. Für letzteres ist eine Einheit 310 für eine Auslegevorschrift vorhanden, die einen Rechner zur Adaptierung der Regelparameter V, Tn enthält. Somit wird sichergestellt, daß die durch den Seegang die Stellmechanik der Regelkreise gfährdende Unruhe erfaßt, ausgewertet und den Regelkreisen zur adaptiven Dämpfung der Stellsignale aufgeschaltet wird.

Insbesondere durch die Kombination aller spezifischen Regeleinheiten in Figur 2, bei denen neben konservativen Elementen weitere spezifische Funktionen gemäß den Figuren 3 bis 6 realisiert sind, werden die eingangs gestellten Forderungen erfüllt. Die anhand der Beispiele beschriebene Schweberegelung zeichnet sich zusammenfassend durch folgende Bestandteile und/oder Funktionen aus:
- ein zeitoptimierter, nichtlinearer Funktionsgeber zur Einstellung der Tiefenänderungsgeschwindigkeit;
- eine Vorsteuerung zur Berechnung des Tiefensollwertes und des Geschwindigkeitssollwertes für schnelle Tiefenänderungen;
- die Berücksichtigung der Trimmung beim Hovern durch Rückführung des Trimmwinkels, der Trimmgeschwindigkeit und der Trimmbeschleunigung in den Geschwindigkeitsregler;
- die Kombination einer linearen und zeitoptimierten Geschwindigkeitsregelung mit adaptiver Begrenzung des Geschindigkeitsreglers an die maximale momentan tiefenabhängig zur Verfügung stehender Pumpenleistung;
- eine Positionsregelung für die exakte Tiefeneinstellung des Bootes mit adaptiver Begrenzung zur Beherrschung der Regelanforderungen des gesamten Systems mit seinen Nichtlinearitäten und Begrenzungen;
- eine Volumenregelung des Tankgewichtes mit tiefenabhängiger Reduktion des Sollwertes für das Hovering-Stellglied, so daß der Antrieb nicht überbelastet wird und genügend Regelreserve zum Abfangen des Bootes vorhanden ist.

Wie bereits erwähnt, wird eine solche Anlage fakultativ durch folgende Maßnahmen in praxisgerechter Weise weitergebildet:
- eine Verbesserung der Regelung durch Anwendung eines Lastbeobachters für schnelles Kompensieren von Laststörungen;
- eine Seegangsadaption zur Vermeidung von nichtlinearer Instabilität des gesamten Regelkreises.

Bei den im einzelnen beschriebenen Beispielen erfolgt der Nachweis der zulässigen Tiefenabweichungen abhängig von der Höhe der Störgewichte bei Seegang 'Null', d.h. bei absolut glatter See. Für den praktischen Betrieb hat dagegen die Regelung auch ein gewisses Maß an Seegang zu verkraften, ohne instabil zu werden, da Seegang 'Null' auf offener See nicht existiert. Hier greift die Seegangsadaption gemäß FIG 7 ein.

## Patentansprüche

1. Verfahren zur Schweberegelung (genannt Hovering) von U-Booten, bei dem zum Gewichtsausgleich Seewasser von See in einen ausgewählten Tank des Bootes und umgekehrt gepumpt wird, wobei ein Algorithmus im Tauchbereich das Schweben und die Tiefenänderungen erfaßt und einen Regelvorgang für Fördermengen von Seewasser gewährleistet, **dadurch gekennzeichnet,** daß der Algorithmus die im U-Boot dominanten Stellbegrenzungen, insbesondere Antriebsspannungen für die Pumpen, maximales Moment, maximale Pumpenleistung, begrenztes Stellvolumen und/oder Kompensation der Volumenkompression des Bootes, erfaßt und die jeweiligen von der Tiefe und der benötigten Fördermenge abhängigen Stelleistungen an den erfassten Stellbegrenzungen adaptiert.

2. Verfahren nach Anspruch 1, **dadurch gekennzeichnet,** daß der Algorithmus in der Lage ist, die Stellbegrenzungen zu beherrschen, und zwar abhängig von der Große des Verfahrweges des U-Bootes und/oder dessen Verfahrgeschwindigkeit und/oder dessen Verfahrbeschleunigung, ohne zu nichtlinearen Instabilitäten zu führen.

3. Verfahren nach Anspruch 1, **dadurch gekennzeichnet,** daß mit dem Algorithmus Schwebe- und Tiefenänderungen entsprechend einem vorgegebenen Tiefensollwert bei Störungen bestimmter Größe ausregelbar sind.

4. Verfahren nach Anspruch 1, **dadurch gekennzeichnet,** daß als Störungen Änderungen der Seewasserdichte, Gewichtsänderungen des Fahrzeuges, Änderungen des Fahrzeugauftriebes durch Volumenkompression bzw. -dekompression, ein von der Wasseroberfläche wirkender Sog, Ausfahren des Periskops und/oder Kommunikationsmastes berücksichtigt werden.

5. Anordnung zur Verwendung bei der Tiefenregelung eines Schwebenden U-bootes durch Ausführung des Verfahrens nach Anspruch 1 oder einem der Ansprüche 2 bis 4, mit einer geregelten Pumpe zum An- bzw. Abpumpen von Seewasser an einen Gewichtsausgleichstank und mit Einrichtungen wenigstens zur Positionsregelung der Schwebetiefe mit unterlagerter Geschwindigkeitsregelung und unterlagerter Volumenregelung, **dadurch gekennzeichnet,** daß die Regeleinheiten (3, 4, 5) eine nichtlineare Einfahrkennlinie und eine adaptive Sollwertführung für die tiefenabhängige Geschwindigkeit haben und damit die Stellbegrenzungen beherrschen.

6. Anordnung nach Anspruch 5, **dadurch gekennzeichnet,** daß ein zeitoptimierter, nichtlinearer Funktionsgeber (8, 9) zur Voreinstellung der Tiefenänderungsgeschwindigkeit vorhanden ist.

7. Anordnung nach Anspruch 5, **dadurch gekennzeichnet,** daß eine Einheit (8) zur Vorsteuerung des Tiefensollwertes und des Geschwindigkeitssollwertes für schnelle Tiefenänderungen vorhanden ist.

8. Anordnung nach Anspruch 5 oder Anspruch 7, **gekennzeichnet** durch eine Kaskadenstruktur der einzelnen Regeleinheiten (2 bis 5).

9. Anordnung nach Anspruch 5, **dadurch gekennzeichnet,** daß Mittel (7) zur Berücksichtigung der sogenannten Trimmung beim Hovern durch Rückführung des Trimmwinkels, der Trimmgeschwindigkeit und/oder der Trimmbeschleunigung vorhanden sind.

10. Anordnung nach Anspruch 5, **dadurch gekennzeichnet,** daß Mittel (41 bis 48) zur Kombination einer linearen und nahezu zeitoptimierten Geschwindigkeitsregelung mit adaptiver Begrenzung des Geschwindigkeitsreglers an die maximale momentan tiefenabhängig zur Verfügung stehende Pumpenleistung vorhanden sind.

11. Anordnung nach Anspruch 5, **dadurch gekennzeichnet,** daß Mittel (1 bis 58) zur Positionsregelung für die exakte Tiefeneinstellung des Bootes (1) mit adaptiver Begrenzung vorhanden sind.

12. Anordnung nach Anspruch 5, **dadurch gekennzeichnet,** daß Mittel (31 bis 33) zur Volumenregelung des Tankgewichtes mit tiefenabhängiger Reduktion des Sollwertes vorhanden sind.

13. Anordnung nach einem oder mehreren der Ansprüche 5 bis 13, **gekennzeichnet** durch die Anwendung eines Lastbeobachters (10).

14. Anordnung nach einem oder mehreren der Ansprüche 5 bis 13, **gekennzeichnet** durch zusätzliche Mittel (300) zur Seegangsadaption zwecks Vermeidung von nicht-linearer Instabilitäten der Regeleinrichtungen.

15. Anordnung nach Anspruch 14, **dadurch gekennzeichnet,** daß die Mittel (300) zur Seegangsadaption die durch den Seegang die Stellmechanik von Regelkreisen gefährdende Unruhe in den Stellgroßen erfassen, auswerten und den Regelkreisen zur adaptiven Dämpfung der Stellsignale aufschalten.

## Claims

1. Method for hovering control (called hovering) of submarines, where, for weight balancing, sea water is pumped from the sea into a selected tank of the submarine and vice versa, wherein an algorithm in the submersion area detects the hovering and the depth changes and guarantees a control process for quantities of sea water transported, characterized in that the algorithm detects the dominant setting limits in the submarine, in particular drive voltages for the pumps, maximum torque, maximum pump output, limited setting volume and/or compensation of the volume compression of the submarine, and adapts the respective setting outputs, which depend on the depth and the required quantity transported, to the detected setting limits.

2. Method according to claim 1, characterized in that the algorithm is in a position to control the setting limits, namely depending on the length of the travel distance of the submarine and/or its travel speed and/or its travel acceleration, without leading to non-linear instability.

3. Method according to claim 1, characterized in that with the algorithm hovering changes and depth changes can be adjusted corresponding to a specified desired depth value in the case of disturbances of a certain magnitude.

4. Method according to claim 1, characterized in that considered as disturbances are changes of the sea water density, weight changes of the vessel, changes of the vessel buoyancy by way of volume compression and decompression, an eddying acting from the water surface, extension of the periscope and/or communications mast.

5. Arrangement for use in the depth control of a hovering submarine by carrying out the method according to claim 1 or one of claims 2 to 4, having a controlled pump for pumping sea water into and out of a weight balancing tank and having devices at least for the position control of the hovering depth with subordinate speed control and subordinate volume control,
characterized in that the control units (3, 4, 5) have a non-linear positioning characteristic and an adaptive desired value control for the depth-dependent speed and in this way control the setting limits.

6. Arrangement according to claim 5, characterized in that there is a time-optimized, non-linear function generator (8, 9) for the presetting of the depth change speed.

7. Arrangement according to claim 5, characterized in that there is a unit (8) for the precontrol of the desired depth value and the desired speed value for rapid depth changes.

8. Arrangement according to claim 5 or claim 7, characterized by a cascade structure of the individual control units (2 to 5).

9. Arrangement according to claim 5, characterized in that there are means (7) for the consideration of the so-called trimming during hovering by way of feedback of the trim angle, the trim speed and/or the trim acceleration.

10. Arrangement according to claim 5,
characterized in that there are means (41 to 48) for the combination of a linear and almost time-optimized speed control with adaptive limitation of the speed controller to the maximum pump output which is currently available such that it is dependent on depth.

11. Arrangement according to claim 5,
characterized in that there are means (1 to 58) for the position control for the exact depth setting of the submarine (1) with adaptive limitation.

12. Arrangement according to claim 5,
characterized in that there are means (31 to 33) for the volume control of the tank weight with depth-dependent reduction of the desired value.

13. Arrangement according to one or more of claims 5 to 13, characterized by the use of a load observer (10).

14. Arrangement according to one or more of claims 5 to 13, characterized by additional means (300) for sea motion adaptation for the purpose of avoiding non-linear instability of the control devices.

15. Arrangement according to claim 14,
characterized in that the means (300) for the sea motion adaptation detect the disturbance in the manipulated variables which endangers the control mechanism of regulating circuits as a result of the sea motion, evaluate it and apply it to the regulating circuits for the adaptive damping of the control signals.

## Revendications

1. Procédé de régulation de stabilisation (dite hovering) de sous-marins, dans lequel de l'eau de mer est pompée de la mer dans un réservoir sélectionné du sous-marin et inversement pour l'équilibrage de poids, un algorithme dans le domaine de plongée détectant la stabilisation et les variations de profondeur et assurant une opération de régulation pour des débits d'eau de mer, caractérisé par le fait que l'algorithme détecte les limitations de réglage dominantes dans le sous-marin, notamment les tensions d'entraînement pour les pompes, le couple maximal, la puissance maximale de pompage, le volume de réglage limité et/ou la compensation de la compression de volume du sous-marin, et adapte les puissances de réglage respectives, dépendantes de la profondeur et du débit nécessaire, aux limitations de réglage détectées.

2. Procédé selon la revendication 1, caractérisé par le fait que l'algorithme est capable de maîtriser les limitations de réglage, et ce en fonction de la grandeur du déplacement du sous-marin et/ou de sa vitesse de déplacement et/ou de son accélération de déplacement, sans produire d'instabilités non linéaires.

3. Procédé selon la revendication 1, caractérisé par le fait que, avec l'algorithme, on peut régler des variations d'équilibre et de profondeur en fonction d'une valeur de consigne de profondeur prédéterminée dans le cas de perturbations d'une certaine grandeur.

4. Procédé selon la revendication 1, caractérisé par le fait qu'on prend en compte comme perturbations des variations de la densité de l'eau de mer, des variations du poids de l'engin, des variations de la poussée verticale de l'engin par compression ou décompression de volume, un remous agissant au niveau de la surface de la mer, une sortie du périscope et/ou du mât de communication.

5. Dispositif destiné à être utilisé lors de la régulation de profondeur d'un sous-marin en plongée grâce à la mise en oeuvre du procédé selon la revendication 1 ou selon l'une des revendications 2 à 4, comportant une pompe régulée pour aspirer de l'eau de mer dans un réservoir d'équilibrage de poids ou l'en refouler et des dispositifs au moins pour la régulation de position de la profondeur de stabilisation avec une régulation de vitesse subordonnée et avec une régulation de volume subordonnée, caractérisé par le fait que les unités de régulation (3, 4, 5) ont une caractéristique de positionnement non linéaire et une conduite de valeur de consigne adaptative pour la vitesse dépendante de la profondeur et maîtrisent ainsi les limitations de réglage.

6. Dispositif selon la revendication 5, caractérisé par le fait qu'il est prévu un générateur de fonction (8, 9), non linéaire et optimisé dans le temps, pour le réglage préalable de la vitesse de variation de profondeur.

7. Dispositif selon la revendication 5, caractérisé par le fait qu'il est prévu une unité (8) pour la commande préalable de la valeur de consigne de profondeur et de la valeur de consigne de vitesse pour de rapides variations de profondeur.

8. Dispositif selon les revendications 5 ou 7, caractérisé par une structure en cascade des différentes unités de régulation (2 à 5).

9. Dispositif selon la revendication 5, caractérisé par le fait qu'il est prévu des moyens (7) pour prendre en compte l'équilibre ou assiette lors de l'hovering grâce à une rétroaction de l'assiette longitudinale, de la vitesse d'assiette et/ou de l'accélération d'assiette.

10. Dispositif selon la revendication 5, caractérisé par le fait qu'il est prévu des moyens (41 à 48) pour combiner une régulation de vitesse linéaire et presque optimisée dans le temps avec une limitation adaptative du régulateur de vitesse à la puissance de pompe maximale momentanément disponible en fonction de la profondeur.

11. Dispositif selon la revendication 5, caractérisé par le fait qu'il est prévu des moyens (1 à 58) pour la régulation de position en vue du réglage de profondeur exact du sous-marin (1) avec une limitation adaptative.

12. Dispositif selon la revendication 5, caractérisé par le fait qu'il est prévu des moyens (31 à 33) pour la régulation de volume du poids de réservoir avec une réduction, dépendante de la profondeur, de la valeur de consigne.

13. Dispositif selon une ou plusieurs des revendications 5 à 12, caractérisé par l'utilisation d'un observateur de charge (10).

14. Dispositif selon une ou plusieurs des revendications 5 à 13, caractérisé par des moyens supplémentaires (300) pour l'adaptation à l'état de la mer afin d'éviter des instabilités non linéaires des unités de régulation.

15. Dispositif selon la revendication 14, caractérisé par le fait que les moyens (300) pour l'adaptation à l'état de la mer détectent l'agitation due à l'état de la mer et mettant en danger la mécanique de réglage des circuits de régulation, l'évaluent et l'appliquent aux circuits de régulation pour l'amortissement adaptatif des signaux de réglage.
